Europäisches Patentamt

European Patent Office

Office européen des brevets

(11) Veröffentlichungsnummer: **0 357 872**
**A1**

## EUROPÄISCHE PATENTANMELDUNG

(21) Anmeldenummer: 89108503.7

(22) Anmeldetag: **11.05.89**

(51) Int. Cl.⁵: **B60R 22/10 , B60N 2/28 , A47D 13/02**

(30) Priorität: **11.08.88 DE 3827309**

(43) Veröffentlichungstag der Anmeldung:
**14.03.90 Patentblatt 90/11**

(84) Benannte Vertragsstaaten:
**DE FR GB IT**

(71) Anmelder: **PEG Perego Pines S.p.A.**
**Via De Gasperi, 50**
**20043 Arcore (Milano)(IT)**

(72) Erfinder: **Perego, Gianluca**
**Via A. D'Adda, 113**
**I-20043 Arcore/Milano(IT)**

(74) Vertreter: **Patentanwälte Grünecker,**
**Kinkeldey, Stockmair & Partner**
**Maximilianstrasse 58**
**D-8000 München 22(DE)**

(54) **Selbsttragendes Behältnis.**

(57) Selbsttragenden Behältnis (1) zur Unterbringung eines Kleinstkindes in einem Kraftfahrzeug indem die Seitenwände (2) des Behältnisses aus einem formelastischen Material, insbesondere Hart-PVC, gefertigt werden, die Einlage (6) etwa mit dem oberen Rand der Seitenwände des Behältnisses abschließt und den Behältnisraum rings um den Innenumfang der Behältniswände im wesentlichen spielfrei ausstützt Die Erfindung eignet sich besonders für abnehmbare Kinderwagenwannen.

FIG. 1

EP 0 357 872 A1

## Selbsttragendes Behältnis

Die Erfindung bezieht sich auf ein Behältnis zur Unterbringung von Kleinstkindern in einem Kraftfahrzeug der im Oberbegriff von Anspruch 1 erläuterten Art.

Ein derartiges Behältnis ist aus der DE-OS 35 46 081 bekannt. Das als Ausführungsbeispiel beschriebene Behältnis hat Seitenwände aus Pappe. Die Einlage besteht aus zwei getrennten stoßaufnehmenden Formkörpern. Die Formkörper sind in Längsrichtung des Behältnisses beidseitig der Liegefläche angeordnet und reichen nicht über das Kleinstkind hinaus. Es hat sich herausgestellt, daß das vorbekannte Behältnis sowohl im Hinblick auf eine Vereinfachung der Herstellung als auch im Hinblick auf seine Wirksamkeit noch verbesserungsfähig ist.

Der Erfindung liegt somit die Aufgabe zugrunde, ein Behältnis der vorgenannten Art bereitzustellen, das einfach und kostengünstig herzustellen ist und ein verbessertes Verhalten bei Auffahrunfällen zeigt.

Die Aufgabe wird durch die kennzeichnenden Merkmale des Anspruchs 1 gelöst.

Durch die Aussteifungswirkung der erfindungsgemäßen Einlage und deren mit den Seitenwänden des Behältnisses etwa abschließenden Höhe wird in Verbindung mit dem Material des Behältnisses ein in sich stabiles und bei Auffahrunfällen doch nachgiebiges Behältnis geschaffen, in dem ein Kleinkind auch bei Auffahrunfällen sicher aufgehoben ist. Der über die Öffnung gezogene Gurt unterstützt sowohl die Einlage als auch das Behältnis und hält beide an ihrem Platz. Ein Behältnis aus Hart-PVC kann darüberhinaus einfach und kostengünstig hergestellt werden.

Die ringförmige Einlage nach Anspruch 2 ist ebenso wesentlich einfacher herstellbar.

Die Ausgestaltung nach Anspruch 3 bietet eine weitere Sicherheit für das Kleinstkind, zusätzlich zum Befestigungsgurt.

Die Ausgestaltung nach Anspruch 4 ist aus hygienischen Gründen bevorzugt.

Durch die Ausgestaltung nach Anspruch 5 kann auch das Brusttuch einfach und kostengünstig befestigt werden.

Die in Anspruch 6 eingegebene Gurtführung erlaubt eine vollkommen gleichmäßige Einleitung der durch den Gurt bei einem Auffahrunfall auf das Behältnis ausgeübten Kräfte.

Ein Ausführungsbeispiel der Erfindung wird nachfolgend anhand der Zeichnungen näher erläutert. Es zeigen:

Fig. 1 eine perspektivische Darstellung eines erfindungsgemäßen Behältnisses,

Fig. 2 den Schnitt II/II aus Fig. 1, und

Fig. 3 die Aufsicht auf Fig. 1.

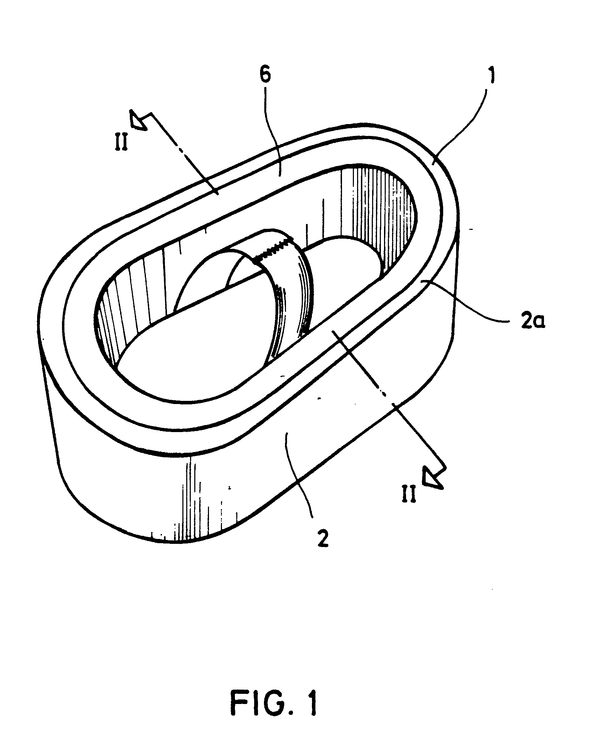

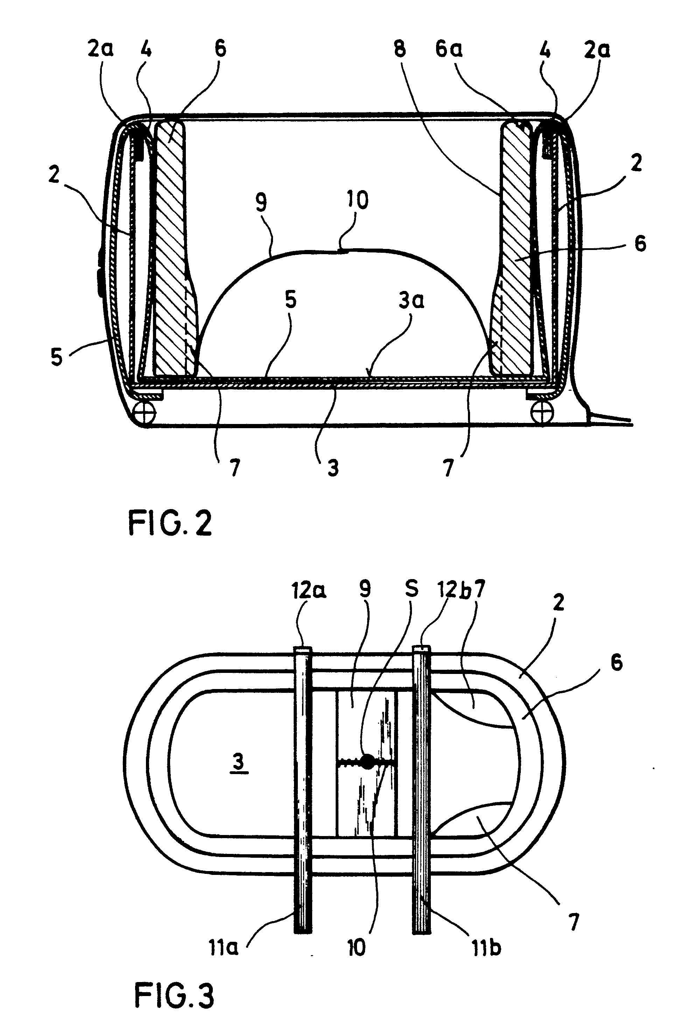

Aus Fig. 1 ist in stark vereinfachter, schematischer Darstellung ein Behältnis 1 in Form einer langovalen Kinderwagenwanne ersichtlich. Wie auch Fig. 2 zeigt, weist die Kinderwagenwanne 1 eine umlaufende Seitenwand 2 und einen Boden 3 auf. Die umlaufende Seitenwand 2 besteht aus einem bei Normalgebrauch genügend steifen, bei Belastung jedoch formelastischen und stoßaufnehmenden Material, insbesondere Hart-PVC. Der die obere Öffnung der Kinderwagenwanne 1 umgebende, freie Rand 2a der Seitenwand 2 ist mit einem Aluminiumrahmen 4 verstärkt. Das Innere der Kinderwagenwanne 1 ist mit einem Stoffbezug 5 ausgekleidet, der nach außen bis über die Außenseite der Seitenwand 2 gezogen wurde.

Im Inneren der Kinderwagenwanne 1 ist eine Einlage 6 in Form eines geschlossen ringförmigen, langovalen Formkörpers angeordnet, der den Behältnisraum rings um den Innenumfang der Seitenwand 2 im wesentlichen spielfrei ausstützt. Die Einlage 6 besteht aus Kunststoff, insbesondere aus verdichtetem Polystyrol.

Die Einlage 6 ist so hoch, daß ihre Oberkante 6a in vollständig eingesetzem Zustand etwa mit dem oberen Rand 2a der Seitenwand 2 abschließt. Im Bereich des Köpfchens des Kleinstkindes weist die Einlage 6 jeweils eine von beiden Seiten in das Innere der Kinderwagenwanne 1 hineinreichende Auswölbung 7 auf. Die Auswölbung 7 erstreckt sich lediglich über einen Teil der Höhe der Einlage 6.

Die Einlage 6 ist parallel zum Boden 3 so breit, daß eine auf dem Boden 3 angeordnete Liegefläche 3a für das Kleinstkind soweit begrenzt wird, daß der Zwischenraum zwischen dem Kleinstkind und den Seitenwänden 2 der Kinderwagenwanne 1 zur Wegbegrenzung des Kleinstkindes bei Auffahrunfällen im wesentlichen ausgefüllt ist. Die Liegefläche 3a sollte so begrenzt sein, daß das Kleinstkind eine sichere seitliche Anlagestütze erhält. Dabei sollte die Liegefläche 3a im Bereich des Körpers des Kleinstkindes auf das rechnerische Mittel der Rumpfbreite eines Kleinstkindes bis 9 kg oder bis zum 9. Lebensmonat von etwa 20 - 30 cm begrenzt werden. Im Bereich des Köpfchens sollten die Auswölbungen 7 derart vorragen, daß die Liegefläche 3a auf die mit etwa 10 -15 cm angegebene Breite des Kinderköpfchens begrenzt wird.

Die Einlage 6 ist in einem schlauchförmigen Stoffüberzug 8 aufgenommen, der vorzugsweise an der dem Boden 3 zugewandten Seite der Einlage 6 mit einem Reißverschluß verschlossen werden kann, so daß der Bezug 8 gewechselt werden kann. Am Bezug 8 ist ein Brusttuch 9 angenäht, das über der Körpermitte des Kleinstkindes mit einem Reißverschluß 10 zu öffnen und zu schließen ist.

Das Brusttuch 9 ist am Bezug 8 in der Nähe des Bodens 3 befestigt und erstreckt sich, wie Fig. 3 zeigt, über den Schwerpunkt S des in der Kinderwagenwanne 1 aufgenommenen Kleinstkindes. Die Kinderwagenwanne 1 wird mit Hilfe von zwei parallel zueinander verlaufenden, üblichen Gurten 11a und 11b auf dem Rücksitz eines Kraftfahrzeuges befestigt. Die Gurte 11a, 11b sind im wesentlichen etwa im gleichen Abstand beidseitig des Schwerpunktes S angeordnet und erstrecken sich um die Kinderagenwanne 1 herum und insbesondere über deren obere freie Öffnung. Die Gurte 11a, 11b liegen somit auf dem oberen freien Rand 2a der Seitenwand 2 und auf dem oberen freien Rand 6a der Einlage 6 an. Dadurch wird die Einlage 6 und somit das Brusttuch 9 sicher an ihrem Platz gehalten. Beide Gurte 11a, 11b sind durch übliche Gurtschlösser 12a, 12b zu schließen.

Beim Gebrauch wird zunächst die Kinderwagenwanne vom Fahrgestell abgenommen und auf den Rücksitz des Kraftfahrzeuges gestellt. Dann wird die Einlage in die Wanne eingestellt und das Kleinstkind bei geöffnetem Brusttuch eingelegt. Das Brusttuch wird geschlossen und die Parallelgurte beidseitig des Schwerpunktes, zweckmäßigerweise unterstützt durch entweder an der Kinderwagenwanne oder an der Einlage an entsprechenden Stellen angebrachten Gurtführungen, über und unter der Kinderwagenwanne und dem Einsatz gezogen. Nach dem Einschnappen der Gurtschlösser ist die Kinderwagenwanne sicher lagefixiert. Durch die Einlage ist auch das Kleinstkind im Inneren der Kinderwagenwanne sowohl bei Auffahrunfällen, die mit einer plötzlichen Beschleunigung des Kraftfahrzeuges, als auch bei Auffahrunfällen, die mit einem plötzlichen Abbremsen des Kraftfahrzeuges verbunden sind, sicher aufgehoben. In beiden Fällen wird das Kleinstkind sofort gegen die stoßaufnehmenden Materialien der Einlage und der Kinderwagenwanne gedrückt, ohne daß ein harter Aufprall, bedingt durch einen größeren zu überbrückenden Zwischenraum, stattfinden kann. Sowohl die Einlage als auch die Wände der Kinderwagenwanne sind stark formelastisch, so daß sie in der Lage sind, einen Großteil der kinetischen Energie zu schlucken. Trotzdem entstehen keine scharfen Kanten, falls die Materialien den auftretenden Kräften nicht gewachsen sind und brechen. Gegen ein Herausschleudern nach oben wird das Kleinstkind durch das Brusttuch und die an den Oberkanten der Einlage angreifenden Gurte abgestützt.

In Abwandlung des beschriebenen und gezeichneten Ausführungsbeispieles kann die Einlage auch aus mehreren Stücken bestehen, wenn diese sich gegenseitig derart zur Befestigung auch X- oder Y- Gurte zu verwenden. Auch das Brusttuch kann unter Umständen weggelassen bzw. an anderen Stellen befestigt sein. Die Erfindung eignet sich für alle Kinderwagenwannen, d.h. auch für solche, die aus vier Seitenwänden zusammengesetzt sind.

Selbstverständlich sollte dann auch die Einlage an die Form der Kinderwagenwanne angepaßt werden.

## Ansprüche

1. Selbsttragendes Behältnis zur Unterbringung eines Kleinstkindes in einem Kraftfahrzeug, insbesondere abnehmbare und auf einer Ablagefläche im Kraftfahrzeug mit einem über die Behältnisöffnung geführten Gurt befestigbare Kinderwagenwanne, mit einer aus mindestens einem stoßaufnahmefähigen Formkörper gebildeten Einlage, die den Zwischenraum zwischen dem Kleinstkind und den Seitenwänden des Behältnisses zur Wegbegrenzung des Kleinstkindes bei Auffahrunfällen im wesentlichen ausfüllt, **gekennzeichnet durch** die folgenden Merkmale:
- das Behältnis (1) weist Seitenwände (2) aus einem formelastischen Material, insbesondere Hart-PVC, auf,
- die Einlage (6) stützt den Behältnisraum rings um den Innenumfang der Seitenwände (2) im wesentlichen spielfrei aus, und
- die Einlage (6) schließt etwa mit dem oberen Rand (2a) der Seitenwände (2) ab.

2. Behältnis nach Anspruch 1, **dadurch gekennzeichnet,** daß die Einlage (6) als geschlossener Ring ausgebildet ist.

3. Behältnis nach einem der Ansprüche 1 oder 2, **dadurch gekennzeichnet,** daß zur Sicherung des Kleinstkindes ein sich quer über die Behältnisöffnung erstreckendes Brusttuch (9) vorgesehen ist.

4. Behältnis nach einem der Ansprüche 1 bis 3, **dadurch gekennzeichnet,** daß die Einlage (6) mit einem abnehmbaren Bezug (8) versehen ist.

5. Behältnis nach Anspruch 4, **dadurch gekennzeichnet,** daß das Brusttuch (9) am Bezug (8) befestigt ist.

6. Behältnis nach einem der Ansprüche 1 bis 5, **dadurch gekennzeichnet,** daß bei Verwendung von Parallelgurten (11a, 11b) zur Befestigung des Behältnisses (1) im Kraftfahrzeug, jeder der Gurte (11a, 11b) in Draufsicht etwa den gleichen Abstand vom Schwerpunkt (S) aufweist.

FIG. 1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 478 323 (WINGARD LTD) * Seite 1, Zeilen 9-16,45-78; Seite 2, Zeilen 48-85; Seite 3, Zeilen 14-17,22-30,48-54; Figuren 1,3,6 * | 1-3 | B 60 R 22/10 B 60 N 2/28 A 47 D 13/02 |
| A | DE-A-3 235 456 (CARL STAHL GmbH & CO. KG) * Seite 4, Zeile 19 - Seite 5, Zeile 1; Seite 9, Zeile 9 - Seite 10, Zeile 3; Figur 1 * | 1,6 | |
| A | DE-A-3 345 588 (CONCORD GmbH) * Seite 5, Zeile 17 - Seite 6, Zeile 9; Figuren 1,2 * | 1,6 | |
| A | FR-A-2 306 853 (R. LAFONT) * Seite 1, Zeilen 17-20; Seite 2, Zeilen 14,15; Seite 2, Zeilen 35-39; Figuren 1,4 * | 1 | |
| A,D | DE-A-3 546 081 (PEG PEREGO PINES S.p.A.) * Spalte 3, Zeilen 41-53; Ansprüche 7-9,14; Figur 2 * | 1,3,4 | RECHERCHIERTE SACHGEBIETE (Int. Cl.5) |
| A | FR-A-1 109 519 (R. LEFEVRE) * Ansprüche 1,2 * | 1 | B 60 R B 60 N A 47 D B 62 B |

Der vorliegende Recherchenbericht wurde für alle Patentansprüche erstellt

| Recherchenort | Abschlußdatum der Recherche | Prüfer |
|---|---|---|
| DEN HAAG | 22-11-1989 | AREAL CALAMA A. |